# FASCICULE DE BREVET EUROPEEN

(11) **EP 2 865 112 B1**
(45) Date de publication et mention de la délivrance du brevet: **17.02.2021**
(21) Numéro de dépôt: 13744620.9
(22) Date de dépôt: 25.06.2013
(51) Int. Cl.: G06Q 20/32, G06Q 20/40, G07C 9/28, H04B 13/00, H04W 12/06

(54) **PROCEDE D'AUTHENTIFICATION ENTRE UN TERMINAL MOBILE ET UN TERMINAL DE TRAITEMENT**
AUTHENTIFIZIERUNGSMETHODE ZWISCHEN EINEM MOBILEN ENDGERÄT UND EINER STATION
AUTHENTICATION METHOD BETWEEN A MOBILE TERMINAL AND PROCESSING TERMINAL

(30) Priorité: 25.06.2012 FR 1255992
(43) Date de publication de la demande: 29.04.2015
(73) Titulaire: ORANGE, 75015 Paris (FR)
(72) Inventeur: LEROY, Patrick, 14740 Saint Monvieux - Norrey (FR); MAYER, Emmanuel, 14123 Ifs (FR)
(86) Numéro de dépôt international: PCT/FR2013/051475
(87) Numéro de publication internationale: WO 2014/001704

(56) Documents cités:
- EP-A1- 1 598 965
- EP-A2- 0 843 425
- EP-A2- 1 096 722
- WO-A1-2009/081337

## Description

L'invention concerne un procédé d'authentification mis en œuvre au moyen d'un terminal mobile. Plus précisément, l'invention porte sur une authentification d'un utilisateur au cours d'une transaction entre un équipement mobile, porté par l'utilisateur et un terminal de traitement. L'équipement mobile n'est pas exposé lors de cette authentification et reste dans la poche, ou dans un sac proche du corps de l'utilisateur. En effet, l'authentification, réalisée par un élément de sécurité inséré dans le terminal mobile utilise les capacités conductrices du corps humain pour échanger des informations entre le terminal de traitement et le terminal mobile.

L'invention trouve une application particulièrement intéressante dans de nombreux services de communication en champ proche, mis en œuvre au moyen d'un terminal mobile, pour lesquels il n'est plus nécessaire d'exposer le terminal mobile au risque de se le faire voler. Ainsi, de tels services peuvent être utilisés en toute sécurité par les utilisateurs.

La technologie de communication en champ proche (on parle habituellement de « NFC », pour « Near Field Communication ») est une technologie de communication sans fil qui s'est largement développée ces dernières années. Ainsi de nombreuses expérimentations de services sur mobile basées sur cette technologie ont été lancées. On peut citer des services de micro-paiement, des services qui utilisent des tickets de transport dématérialisés ; on parle habituellement d'application de « ticketing » ou de « e-ticket ». Par exemple, dans le cas d'un service de ticketing pour transports en commun, un utilisateur équipé d'un terminal mobile NFC sur lequel est installée une application propre à ce service de transport, recharge dans un premier temps un compte dédié. A cette fin, il achète un nombre déterminé de tickets et recharge ce compte sur son terminal mobile auprès d'une borne NFC dédiée à cet usage. Lorsqu'ensuite, il souhaite emprunter le transport en commun, il approche son terminal mobile d'une borne NFC dédiée à ce service et située dans le véhicule de transport. Le compte propre au service est alors décrémenté du nombre de ticket nécessaire pour effectuer un trajet et l'utilisateur est autorisé à effectuer le trajet. Cependant certains services nécessitent la saisie d'une donnée d'authentification de l'utilisateur destinée à prouver que l'utilisateur qui tente d'utiliser le terminal mobile pour un service donné est bien le détenteur légitime du terminal. Cette donnée est par exemple un code d'identification personnel, ou code « PIN » de service (pour « Personal Identification Number »). La saisie d'un code PIN correct et donc une authentification réussie de l'utilisateur permet en général de débloquer l'application installée sur le terminal mobile afin qu'elle s'exécute. Des services qui nécessitent la saisie d'un code PIN sont par exemple des services de paiement, pour lesquels un certain niveau de sécurité est requis. La sécurité est alors garantie par cette authentification préalable de l'utilisateur.

On connaît par ailleurs la technologie Body Area Network (ou Wireless Body Area Network) qui permet des communications sans fil entre des capteurs miniatures à même le corps et une unité de traitement portée par l'utilisateur. Cette technologie est décrite dans la thèse de Thomas Guthrie Zimmerman « Personal Area Networks (PAN) : Near-Field Intra-Body Communication ». La demande de brevet de la demanderesse publiée sous le numéro WO2012/1314224 décrit un dispositif et un système de communication adaptés pour mettre en œuvre une communication à travers le corps de l'utilisateur entre un dispositif porté par l'utilisateur, ou dispositif portatif, et une station de base équipée d'une surface sensitive sur laquelle l'utilisateur approche ou pose sa main pour assurer la communication entre la station de base et le dispositif. La technique décrite dans cette demande de brevet est mise en œuvre dans le cadre d'un service de ticketing. Dans cette demande de brevet, la station de base est agencée pour fonctionner selon des cycles successifs d'émission/réception continus de durée respective prédéfinie. Ainsi, lors d'une première période d'émission de durée déterminée la station de base émet un premier signal électrique modulé associé à un message de recherche/d'interrogation. Le dispositif portatif qui était jusque-là en état d'attente, détecte et reçoit le premier signal électrique modulé véhiculé par le corps de l'utilisateur. Le signal modulé reçu est démodulé par le dispositif portatif puis analysé. La détection et la réception du premier signal déclenche le passage du dispositif portatif en mode émission pendant une deuxième période prédéfinie. Le dispositif portatif répond alors au premier message reçu en calculant un nouveau solde de tickets et en construisant un message numérique de réponse. Le message numérique de réponse est alors modulé par le dispositif portatif en un deuxième signal électrique modulé qui est envoyé, via une interface radio du dispositif, à travers le corps de l'utilisateur. Dans une période suivante de réception, la station de base reçoit alors le deuxième signal électrique modulé via une antenne radio. Le deuxième message électrique modulé est démodulé et son contenu analysé de manière à autoriser au non l'utilisateur à emprunter le transport en commun. Ainsi, la station de base est agencée pour être alternativement en mode émission pendant une première période donnée et en mode réception pendant une deuxième période donnée. Le dispositif porté par l'utilisateur est lui, dans un état d'attente jusqu'à recevoir un signal électrique modulé qui le fait passer en mode émission pendant une période donnée, puis en mode réception pendant une autre période donnée.

Le dispositif portatif et la station de base comprennent un modulateur, un démodulateur, une interface radio destinée à émettre et recevoir des signaux électriques modulés à travers le corps d'un utilisateur, et des moyens de commutation adaptés pour connecter alternativement l'interface radio au modulateur suite à la réception d'un signal électrique modulé puis au démodulateur suite à l'émission d'un signal électrique modulé.

Dans un exemple particulier de réalisation, le dispositif portatif est un terminal mobile équipé d'une antenne NFC, ladite antenne constituant l'interface radio du dispositif, et l'utilisation de ce terminal est illustrée dans le cadre d'un service de ticketing. Ainsi, l'utilisateur peut utiliser son terminal mobile pour emprunter les transports en commun en exécutant une application NFC mémorisée sur son terminal mobile, sans sortir son terminal mobile de sa poche ou de son sac. Cependant, lorsque l'on souhaite utiliser le dispositif et le procédé dans un service NFC sécurisé, au cours duquel il est demandé à l'utilisateur de saisir une donnée qui lui est propre, tel un code PIN, l'utilisateur doit sortir son téléphone de son sac ou de sa poche pour saisir le code PIN sur le clavier de son terminal. Ceci expose le terminal de l'utilisateur dans un lieu public et augmente le risque de vol. Ainsi, une telle technologie sans contact perd de son intérêt à partir du moment où une authentification de l'utilisateur est requise.

Le document EP 0 843 425 A2 décrit un dispositif de communication comprenant un émetteur porté par un utilisateur et agencé pour produire et émettre un signal chiffré représentatif d'une information d'authentification, et un récepteur agencé pour recevoir via une interface physique et en provenance du corps de l'utilisateur le signal chiffré et le déchiffrer afin de vérifier l'identité de l'utilisateur.

Le document EP 1 096 722 A2 décrit un système d'authentification d'utilisateur mettant en œuvre un terminal mobile et un terminal de traitement qui établissent entre eux un canal de communication pour signaux radioélectriques en utilisant la capacité de conduction du corps de l'utilisateur. Le terminal mobile génère les données d'authentification de l'utilisateur pour un service donné et les transmet par ce canal au terminal de traitement, qui procède alors à l'authentification de l'utilisateur sur la base de ces données avant d'exécuter le service demandé.

Un des buts de l'invention est de remédier à des insuffisances/inconvénients de l'état de la technique et/ou d'y apporter des améliorations.

A cette fin, l'invention propose un procédé d'authentification entre un terminal mobile, situé à une distance inférieure à une première distance prédéterminée du corps d'un utilisateur, le terminal mobile comprenant une antenne NFC constituant une interface radio adaptée pour émettre et recevoir des signaux radioélectriques, et un terminal de traitement comprenant une antenne NFC adapté pour émettre et recevoir des signaux radioélectriques, le terminal mobile et le terminal de traitement échangeant des informations au moyen de signaux radioélectriques modulés, les signaux radioélectriques étant transmis entre le terminal mobile et le terminal de traitement en utilisant une capacité de conductivité du corps de l'utilisateur, le procédé comprenant :
- une étape de détection qu'une partie du corps de l'utilisateur est située à une distance inférieure à une deuxième distance prédéterminée d'une interface utilisateur du terminal de traitement, ladite détection déclenchant un réveil du terminal de traitement et l'établissement d'une communication entre le terminal de traitement et le terminal mobile,
- une étape d'invitation de l'utilisateur par le terminal de traitement à saisir une donnée personnelle d'authentification,
- une étape d'envoi par le terminal de traitement au terminal mobile d'un signal radioélectrique comprenant ladite donnée personnelle d'authentification,
- une étape de réception par le terminal de traitement d'un signal radioélectrique émis par le terminal mobile comprenant une donnée représentant le résultat d'une vérification de la donnée personnelle d'authentification réalisée par le terminal mobile,
- une étape de vérification de ladite donnée reçue par le terminal de traitement, l'authentification étant réussie lorsque la vérification est positive.

Avec le procédé de l'invention, l'authentification de l'utilisateur, nécessaire pour déclencher l'exécution d'une application mémorisée sur le terminal mobile de l'utilisateur se fait sans que l'utilisateur ait à sortir son terminal mobile pour saisir sa donnée personnelle d'authentification sur le clavier du terminal. En effet, la donnée personnelle d'authentification est saisie par l'utilisateur sur une interface utilisateur du terminal de traitement, puis transmise par celui-ci au terminal mobile qui effectue alors la vérification avec une donnée d'authentification de référence préalablement mémorisée sur le terminal en association avec l'application. Ainsi, le terminal mobile n'est pas exposé durant la transaction avec le terminal de traitement, puisque celui-ci reste dans le sac ou dans la poche de l'utilisateur. Le risque de vol du terminal mobile au moment de la saisie de la donnée personnelle d'authentification est donc limité.

Dans un mode de réalisation particulier, le procédé comprend en outre une étape de mémorisation de la donnée personnelle saisie.

Selon un exemple de réalisation, la vérification de la donnée personnelle d'authentification réalisée par le terminal mobile consiste à comparer la donnée saisie avec une donnée de référence, mémorisée dans un élément de sécurité du terminal mobile.

Avantageusement, l'antenne du terminal mobile constituant l'interface radio adaptée pour émettre et recevoir des signaux radioélectriques est une antenne NFC.

Dans ce mode de réalisation, le procédé propose une authentification de transactions dans le cadre de services NFC mis en œuvre sur le terminal mobile. La technologie NFC est actuellement en plein essor et de nombreux services sont envisagés ou déjà en expérimentation. L'utilisation du procédé de l'invention dans le cadre de tels services permet à l'utilisateur d'envisager de tels services en toute confiance puisque le risque non négligeable de vol de son terminal mobile est écarté. D'autre part, l'utilisation du service est pratique et facile puisque l'utilisateur interagit avec le terminal de traitement par le biais de son propre corps.

Selon un exemple de réalisation de l'invention, la donnée personnelle d'authentification saisie et la donnée représentant le résultat de la vérification sont transmises de manière sécurisée.

L'échange sécurisé de la donnée personnelle d'authentification saisie par l'utilisateur, et de la donnée de contrôle représentant le résultat de la vérification permet de renforcer la sécurité du service en limitant les risques de récupération de ces informations par écoute de la voie radio.

Dans un exemple de réalisation de l'invention, l'étape d'invitation consiste à afficher sur l'interface utilisateur du terminal de traitement un clavier numérique comprenant des chiffres dans lequel l'ordre d'affichage des chiffres est aléatoire.

La sécurité du service de retrait bancaire est renforcée puisque l'affichage des chiffres du clavier dans un ordre aléatoire évite à quelqu'un de malintentionné de repérer la donnée personnelle d'authentification par observation de l'utilisateur lors de la saisie de cette donnée.

Dans un autre exemple de réalisation, l'interface utilisateur du terminal de traitement est équipée d'un filtre de confidentialité, rendant une observation par un tiers impossible lors de la saisie.

La sécurité d'un service, par exemple de retrait, est renforcée puisque le filtre ne permet pas à quelqu'un situé à proximité de l'utilisateur de lire l'écran du terminal de traitement lors de la saisie par l'utilisateur de la donnée personnelle d'authentification. En effet un tel filtre nécessite d'être dans l'axe de l'écran pour voir effectivement ce qui apparaît sur l'écran.

L'invention concerne aussi une utilisation du procédé d'authentification tel que décrit précédemment dans un service de retrait bancaire, le procédé comprenant en outre, après une vérification positive :
- une étape d'invitation à saisir un montant,
- une étape de mémorisation d'un montant déterminé, choisi par l'utilisateur,
- une phase de dialogue avec un établissement bancaire pour obtenir une autorisation de débit,
- si le débit est autorisé, une étape de distribution dudit montant.

Le procédé de l'invention est utilisé dans le cadre d'un service de retrait bancaire. Le terminal mobile a préalablement mémorisé l'application de retrait soumise à authentification. Le procédé de l'invention renforce la sécurité de ce type de service. En effet, l'utilisateur n'a pas à sortir une carte bancaire de sa poche ou de son sac, puisque l'application de retrait est mémorisée sur le terminal mobile. D'autre part, la saisie de la donnée personnelle d'authentification se fait sans que l'utilisateur ne sorte son terminal mobile de sa poche ou de son sac. Ainsi, la sécurité de ce genre de service est renforcée.

Dans un exemple d'utilisation du procédé de l'invention dans un service de retrait bancaire, un message de confirmation de transaction est envoyé au terminal mobile de l'utilisateur.

La confirmation de la transaction de retrait est transmise directement au terminal mobile au moyen par exemple d'un message SMS. Ainsi, l'utilisateur n'a pas à se soucier de récupérer et de stocker un ticket papier résumant la transaction. L'utilisateur peut par ailleurs traiter ce message comme il le souhaite. Notamment il peut facilement l'archiver sans risque de perte.

L'invention concerne aussi un terminal de traitement comprenant une interface radio NFC agencée pour émettre et recevoir des signaux radioélectriques, le terminal de traitement échangeant des informations au moyen de signaux radioélectriques modulés avec un terminal mobile, les signaux radioélectriques étant transmis entre un terminal mobile, situé à une distance inférieure à une première distance prédéterminée du corps d'un utilisateur, et le terminal de traitement en utilisant une capacité de conductivité du corps de l'utilisateur, le terminal de traitement comprenant :
- une unité de traitement ;
- une interface utilisateur, couplée à l'interface radio, agencée pour détecter qu'une partie du corps de l'utilisateur du terminal mobile est située à une distance inférieure à une deuxième distance prédéterminée, ladite détection déclenchant un réveil du terminal de traitement et l'établissement d'une communication entre le terminal de traitement et le terminal mobile,
- des moyens d'invitation, agencés pour inviter l'utilisateur à saisir une donnée personnelle d'authentification,
- des moyens d'envoi, agencés pour envoyer un signal radioélectrique comprenant ladite donnée personnelle d'authentification au terminal mobile,
- des moyens de réception, agencés pour recevoir un signal radioélectrique émis par le terminal mobile comprenant une donnée représentant le résultat d'une vérification de la donnée personnelle d'authentification réalisée par le terminal mobile,
- des moyens de vérification, agencés pour vérifier ladite donnée reçue.

Dans un mode particulier de réalisation, le terminal de traitement comprend en outre des moyens de mémorisation, agencés pour mémoriser la donnée personnelle d'authentification saisie.

Dans un exemple de réalisation, le terminal de traitement comprend en outre une plaque métallique posée au sol, destinée à maintenir la communication entre le terminal de traitement et le terminal mobile, lorsqu'un utilisateur pose ses pieds sur ladite plaque.

La plaque métallique permet de maintenir un contact entre le terminal de traitement et le terminal mobile de l'utilisateur et de prévenir toute rupture de communication entre les deux entités. Cet élément rend plus fiable l'utilisation du service.

L'invention concerne aussi un système d'authentification comprenant :
- un terminal de traitement tel que décrit précédemment, et
- un terminal mobile comprenant une antenne NFC constituant une interface radio adaptée pour émettre et recevoir des signaux radioélectriques, situé à une distance inférieure à une distance prédéterminée du corps d'un utilisateur, le terminal mobile et le terminal de traitement échangeant des informations au moyen de signaux radioélectriques modulés, les signaux électriques étant transmis entre le terminal mobile et le terminal de traitement en utilisant une capacité de conductivité du corps de l'utilisateur.

L'invention porte également sur un programme sur un support de données et chargeable dans la mémoire interne d'un terminal de traitement, le programme comprenant des portions de code pour l'exécution des étapes du procédé d'authentification tel que décrit précédemment, lorsque le programme est exécuté sur ledit terminal.

L'invention concerne aussi un support de données sur lequel est enregistré le programme d'ordinateur tel que décrit précédemment.

De nombreux détails et avantages de l'invention seront mieux compris à la lecture de la description d'un mode particulier de réalisation en référence aux dessins annexés donnés à titre non limitatif, et dans lesquels :
- la figure 1 est une représentation schématique d'un système d'authentification selon un premier exemple de réalisation de l'invention ;
- la figure 2 présente les étapes d'un procédé d'authentification, selon un premier exemple de réalisation ;
- la figure 3 est une représentation schématique d'un terminal de traitement selon un premier exemple de réalisation.

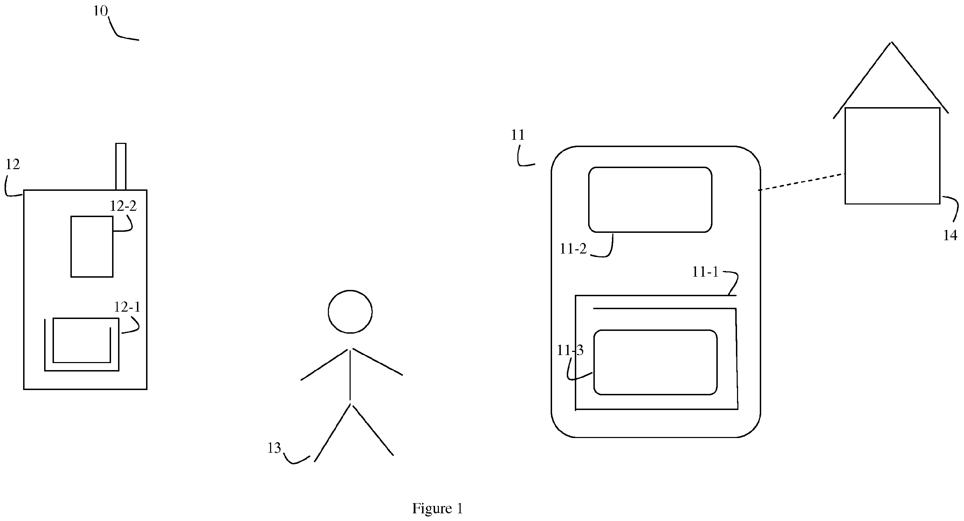

Un système d'authentification 10 va maintenant être décrit en relation avec la figure 1 dans un mode de réalisation particulier.

Le système 10 comprend un terminal de traitement 11 et un terminal mobile 12. Un utilisateur 13, détenteur du terminal mobile 12 joue un rôle actif dans le système 10. L'utilisation du système 10 est illustrée dans le cadre d'un service de retrait bancaire. Ainsi, dans l'exemple de réalisation décrit, le terminal de traitement 11 est un distributeur bancaire. Le terminal de traitement 11 et le terminal mobile 12 sont adaptés pour émettre et recevoir des signaux radioélectriques à travers le corps de l'utilisateur 13 via des antennes respectives 11-1, 12-1. Par la suite, une émission à travers le corps de l'utilisateur correspond à une émission d'un signal radioélectrique en utilisant une capacité de conductivité du corps de l'utilisateur. Une réception à travers le corps de l'utilisateur correspond alors à une réception d'un tel signal radioélectrique. Dans un mode de réalisation particulier, le terminal mobile 12 et le terminal de traitement 11 fonctionnent conformément aux dispositifs décrits dans la demande de la demanderesse publiée sous le numéro WO2012/1314224. Selon cette demande, un premier dispositif et un deuxième dispositif portatif, porté par l'utilisateur, sont agencés pour fonctionner selon des cycles successifs d'émission/réception continus de durée respective prédéfinie. Ainsi, lors d'une première période d'émission de durée déterminée, le premier dispositif émet un premier signal électrique modulé associé à un message de recherche/d'interrogation. Le deuxième dispositif qui était jusque-là en état d'attente, détecte et reçoit le premier signal électrique modulé véhiculé par le corps de l'utilisateur. Le signal modulé reçu est démodulé par le deuxième dispositif puis analysé. La détection et la réception du premier signal déclenche le passage du deuxième dispositif en mode émission pendant une deuxième période prédéfinie. Le deuxième dispositif répond alors au premier message reçu en construisant un message numérique de réponse. Le message numérique de réponse est alors modulé par le deuxième dispositif en un deuxième signal électrique modulé qui est envoyé, via l'antenne du deuxième dispositif, à travers le corps de l'utilisateur. Dans une période suivante de réception, le premier dispositif reçoit alors le deuxième signal électrique modulé via son antenne radio. Le deuxième message électrique modulé est démodulé et son contenu analysé. Ainsi, le premier dispositif est agencé pour être alternativement en mode émission pendant une première période donnée et en mode réception pendant une deuxième période donnée. Le deuxième dispositif, porté par l'utilisateur, est lui, dans un état d'attente jusqu'à recevoir un signal électrique modulé qui le fait passer en mode émission pendant une période prédéfinie. Les deux dispositifs échangent ainsi au moyen de signaux radioélectriques modulés des informations qui permettent de mettre en œuvre des services. L'invention décrite dans la demande de brevet publiée sous le numéro WO2012/1314224 est illustrée dans le cadre d'un service qui utilise des tickets de transport dématérialisés (on parle habituellement de service de « ticketing »).

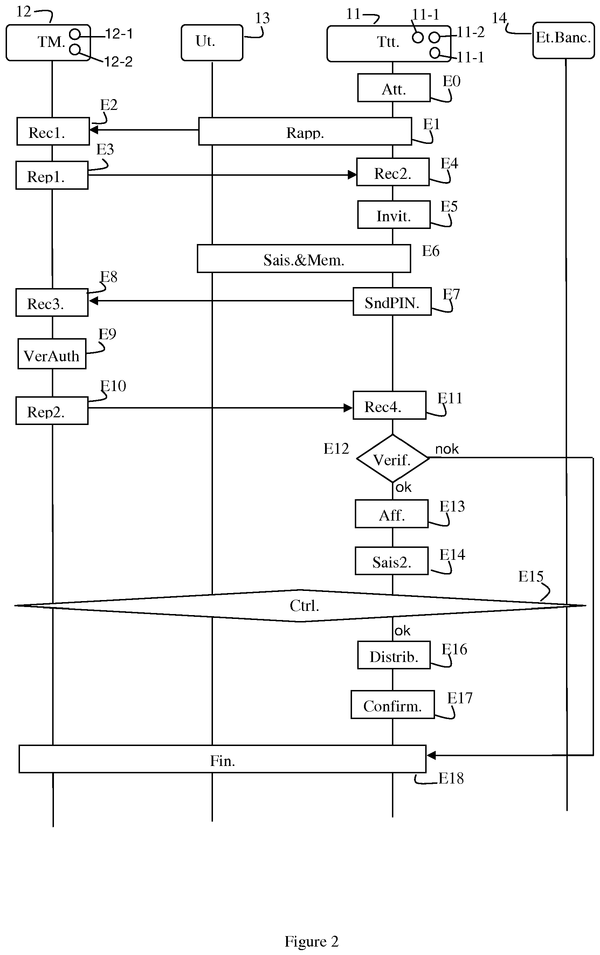

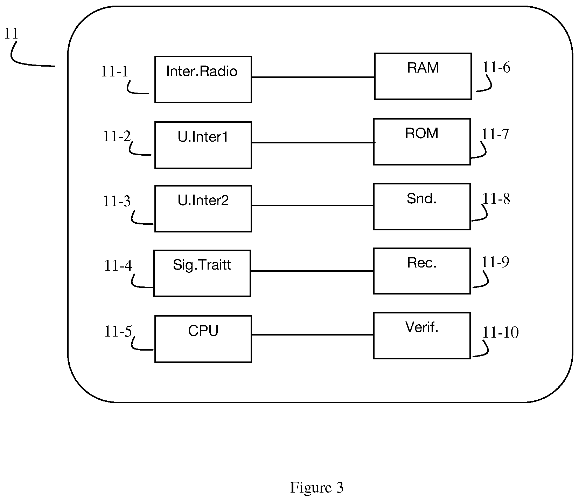

Dans le cadre de la présente invention, le terminal de traitement 11 comprend une première interface utilisateur 11-2, adaptée pour transmettre des informations à l'attention de l'utilisateur. La première interface utilisateur 11-2 est par exemple un écran sur lequel des messages sont affichés. Dans un autre exemple de réalisation, la première interface 11-2 est un haut-parleur adapté pour diffuser des messages vocaux. Le terminal de traitement 11 comprend également une deuxième interface utilisateur 11-3, adaptée pour recevoir des informations du terminal mobile 12 à travers le corps de l'utilisateur, et pour transmettre des informations au terminal mobile 12 à travers le corps de l'utilisateur 13. Dans un exemple de réalisation, la deuxième interface 11-3 est une surface sensitive adaptée pour réagir lorsque l'utilisateur l'effleure ou est en contact avec elle. Par exemple, l'utilisateur peut poser sa main sur la surface sensitive 11-3. La surface sensitive 11-3 est couplée à l'antenne 11-1 et reçoit et transmet des signaux radioélectriques à travers cette antenne. Le terminal de traitement 11 est décrit plus en détail en relation avec la figure 3. Dans l'exemple de réalisation du procédé qui va être décrit en relation avec la figure 2, le terminal de traitement 11 est un distributeur bancaire connecté à un établissement bancaire distant 14. Le distributeur et l'établissement bancaire 14 sont connectés au moyen d'une liaison spécialisée, ou à travers un réseau, par exemple le réseau Internet.

Le terminal mobile 12 est adapté pour établir des communications mobiles à travers un réseau de télécommunications mobile, par exemple un réseau « GSM » (de l'anglais « Global System for Mobile communications ») « UMTS » (de l'anglais « Universal Mobile Télécommunications System »), et pour fonctionner en mode NFC. Le fonctionnement en mode NFC permet d'exécuter des applications dites NFC, préalablement installées dans une zone mémoire sécurisée d'un élément de sécurité 12-2 inséré dans le terminal 12 (une telle zone est habituellement appelée « container »). L'élément de sécurité est par exemple une carte « SIM » (pour « Subscriber Identity Module »). A cet effet, le terminal mobile 12 est équipé d'une antenne NFC. Cette antenne NFC est adaptée pour émettre/recevoir une composante magnétique d'une onde électromagnétique et également une composante électrique de cette même onde. Cette antenne NFC constitue également l'interface radio 12-1 adaptée pour émettre et recevoir des signaux radioélectriques à travers le corps de l'utilisateur 13. On comprend qu'ainsi, le terminal mobile 12, équipé d'une seule antenne NFC, peut à la fois réaliser des transactions NFC et également des transactions à travers le corps de l'utilisateur. Une application NFC sécurisée (non représentée sur la figure 1) est mémorisée dans l'élément de sécurité 12-2 du terminal mobile 12. Cette application est associée à une donnée personnelle d'authentification de référence (non représentée sur la figure 1) paramétrée par l'utilisateur 13. La donnée personnelle d'authentification de référence, mémorisée dans l'élément de sécurité 12-2 en association avec l'application NFC sécurisée est destinée à contrôler l'accès à ladite application. Ainsi, si l'utilisateur souhaite exécuter l'application NFC sécurisée, il lui est dans un premier temps demandé de saisir la donnée personnelle d'authentification associée à l'application. Si la donnée d'authentification saisie est identique à la donnée d'authentification de référence préalablement mémorisée dans l'élément de sécurité, alors l'application NFC est exécutée. Dans l'exemple de réalisation du procédé qui va être décrit en relation avec la figure 2, l'application NFC sécurisée est une application de retrait bancaire.

Le terminal mobile 12 est situé à proximité de l'utilisateur 13, sans nécessairement être en contact direct avec celui-ci. Par exemple, le terminal mobile 12 est placé à l'intérieur d'une poche ou d'un sac porté contre l'utilisateur 13. Dans ces configurations, on estime que le terminal mobile 12 n'est pas éloigné de plus de quelques centimètres du corps de l'utilisateur 13. La distance est par exemple inférieure à six centimètres. Un signal radioélectrique émis par l'antenne 12-1 du terminal mobile est alors transmis au travers du corps de l'utilisateur en utilisant la capacité de conductivité du corps humain et est reçu au moyen de la deuxième interface 11-3 du terminal de traitement. Réciproquement, un signal radioélectrique émis par l'antenne 11-1 du terminal de traitement est transmis au moyen de la deuxième interface 11-3 à travers le corps de l'utilisateur en utilisant la capacité de conductivité du corps humain et est reçu par l'antenne 12-1 du terminal mobile.

Les étapes d'un procédé d'authentification, selon un exemple de réalisation, vont maintenant être décrites en relation avec la figure 2.

Le procédé d'authentification d'une transaction est illustré dans le cadre d'un service de retrait bancaire. Le terminal de traitement 11 est un distributeur qui comprend comme première interface 11-2 un écran et comme deuxième interface 11-3 une surface sensitive que l'utilisateur peut effleurer ou sur laquelle il peut poser la main.

Pour effectuer une opération bancaire de type retrait, l'utilisateur doit préalablement s'authentifier. L'authentification a pour but d'identifier l'utilisateur et de prouver que l'utilisateur est bien la personne qu'il prétend être. Classiquement, lorsqu'un utilisateur souhaite effectuer un retrait bancaire au moyen d'une carte de crédit qui constitue l'élément de sécurité permettant une authentification de l'utilisateur, il insère sa carte de crédit dans un distributeur. Le distributeur affiche alors un message invitant l'utilisateur à saisir un code confidentiel attaché à sa carte. Le code est censé n'être connu que de l'utilisateur, ce qui permet de valider l'identité de l'utilisateur. Le code saisi est alors vérifié localement, c'est-à-dire uniquement avec la carte, ce qui permet de mettre en œuvre l'opération financière entre l'utilisateur, plus précisément sa carte bancaire via le distributeur, et un établissement bancaire distant. Des échanges sécurisés sont alors initiés entre la carte et l'établissement bancaire distant afin d'autoriser le retrait si les données bancaires de l'utilisateur en possession de l'établissement bancaire le permettent.

Dans le contexte de l'invention, l'utilisateur n'a pas à insérer sa carte bancaire dans le distributeur.

Dans une étape initiale E0 d'attente, il est affiché sur la première interface 11-2, en l'espèce l'écran du terminal de traitement 11 un message invitant l'utilisateur 13 à allumer son terminal mobile 12 ou à s'assurer que celui-ci est allumé, et à poser une partie de son corps, par exemple sa main sur la deuxième interface 11-3, en l'espèce la surface sensitive du terminal de traitement 11. Cet état E0 est un état de veille dans lequel le terminal de traitement 11 attend d'être réveillé par une action de l'utilisateur. Dans cet état le terminal de traitement 11 est inactif, il n'émet ni ne reçoit aucune trame de données. La partie du message affichée sur l'écran 11-1 et relative au terminal mobile 12 est destinée à s'assurer qu'une communication peut être établie entre le terminal mobile 12 et le terminal de traitement 11. En effet, on comprend que si le terminal mobile 12 est éteint, alors aucune communication ne peut être établie entre le terminal de traitement 11 et le terminal 12 et le procédé d'authentification ne peut s'exécuter. On suppose ici que le terminal mobile 12 de l'utilisateur est allumé.

Dans une étape suivante E1 de rapprochement, l'utilisateur 13 pose sa main sur la surface sensitive 11-3 du terminal de traitement 11. Cette étape E1 de rapprochement est destinée à déclencher le réveil du terminal de traitement 11 et à établir une communication entre le terminal de traitement 11 et le terminal mobile 12, à travers le corps de l'utilisateur 13. Le contact de l'utilisateur 13 avec la surface sensitive 11-3 du terminal de traitement 11 est détecté par le terminal de traitement 11 et déclenche le réveil du terminal de traitement 11 et l'envoi par ce terminal d'un premier signal électrique modulé transportant une première trame de données via l'antenne 11-1 vers le terminal mobile 12 à travers le corps de l'utilisateur. Cette trame est destinée à établir un contact entre les deux entités. Avec ce premier signal, le terminal de traitement 11 signale sa présence au terminal mobile 12 et lui demande de s'identifier.

L'établissement d'une communication entre deux entités est réalisée de manière connue dans une phase appelée habituellement « handshake », ou poignée de main. La phase de handshake consiste à échanger plusieurs trames préalables entre deux entités permettant d'échanger de premiers paramètres afin de rendre possible un dialogue entre les deux entités.

Dans une étape E2 de réception par le terminal mobile, le terminal mobile 12, jusque-là en état d'attente, reçoit le premier signal électrique modulé correspondant à la trame d'établissement d'un contact, via l'antenne 12-1 du terminal mobile. Cette étape est destinée à informer le terminal mobile 12 que la communication en cours est établie en NFC via le corps de l'utilisateur entre le terminal mobile 12 et le terminal de traitement 11.

Dans une étape E3 de réponse, le terminal mobile 12 envoie un deuxième signal électrique modulé correspondant à une deuxième trame de données. Ce deuxième signal électrique modulé est destiné à répondre au terminal de traitement 11 qu'un terminal mobile est présent et que ce terminal sait dialoguer avec le terminal de traitement 11 à travers le corps de l'utilisateur, dans le même langage que celui du terminal de traitement 12.

Dans une étape E4 de réception par le terminal de traitement, le terminal de traitement 11 reçoit le deuxième message électrique modulé à travers le corps de l'utilisateur via l'antenne 11-1 couplée à la surface sensitive 11-3. A ce stade, le terminal de traitement 11 est assuré qu'il peut dialoguer avec le terminal mobile 12.

Les étapes E1 à E4 constituent la phase de poignée de main, ou de handshake, préalable au dialogue entre le terminal mobile 12 et le terminal de traitement 11.

Dans une étape E5 d'invitation par le terminal de traitement, il est affiché sur l'écran 11-2 du terminal de traitement 11 un message invitant l'utilisateur 13 à saisir une donnée personnelle d'authentification. La donnée personnelle d'authentification est associée à l'application NFC de retrait bancaire mémorisée dans le terminal mobile 12 et est destinée à débloquer cette application sur le terminal. Dans un premier exemple de réalisation, la donnée personnelle d'authentification demandée est un code « PIN » de service (de l'anglais « Personal Identification Number »). Dans cet exemple, il est affiché également sur la surface sensitive 11-2 du terminal de traitement 11 un clavier numérique (non représenté sur la figure 2).

Dans une étape E6 de saisie et de mémorisation, l'utilisateur 13 saisit sa donnée personnelle d'authentification. Dans le premier exemple décrit ici, il saisit le code PIN associé à l'application NFC de retrait bancaire au moyen du clavier numérique affiché sur la surface sensitive 11-3 du distributeur 11. Le code PIN est en général constitué de quatre chiffres. Chacun des chiffres saisis par l'utilisateur 13 est mémorisé par le terminal de traitement 11. Dans un exemple de réalisation, un caractère du clavier permet de corriger le ou les derniers chiffres saisis.

Une fois les quatre chiffres saisis, ou après saisie d'un caractère spécifique marquant la fin de la saisie, la donnée d'authentification saisie et mémorisée par le terminal de traitement 11 est transmise au terminal mobile 12 au cours d'une étape E7 d'envoi de la donnée d'authentification. La donnée d'authentification saisie est transmise à l'intérieur d'un troisième signal électrique modulé.

Dans une étape E8 de réception de la donnée personnelle d'authentification, le terminal mobile 12 reçoit le signal modulé électrique qui transporte la donnée personnelle d'authentification saisie par l'utilisateur. Le signal est démodulé, ce qui permet au terminal mobile 12 d'obtenir la donnée d'authentification telle qu'elle a été mémorisée par le terminal de traitement 11.

Dans une étape E9 de vérification de l'authentification, la donnée d'authentification reçue au cours de l'étape précédente E8 est comparée à la donnée personnelle d'authentification de référence préalablement mémorisée dans le terminal mobile 12 en association avec le service de retrait bancaire. La donnée d'authentification de référence est stockée de manière sécurisée, dans un container de sécurité de l'élément de sécurité 12-2. La vérification de l'authentification est positive lorsque la donnée saisie est identique à la donnée de référence. Elle est négative dans le cas contraire.

Dans une étape E10 de réponse, le terminal mobile 12 envoie dans un quatrième signal électrique modulé une trame comprenant une donnée de contrôle destinée à indiquer le résultat de l'authentification réalisée par l'élément de sécurité 12-2. Par exemple, la donnée de contrôle correspond au message « ok », lorsque la vérification de l'authentification effectuée au cours de l'étape E9 est positive, et « nok » lorsque la vérification est négative. La donnée de contrôle représente ainsi le résultat de la vérification de la donnée personnelle d'authentification effectuée par le l'élément de sécurité 12-2.

Dans une étape E11 de réception, le terminal de traitement reçoit la donnée de contrôle envoyée par le terminal mobile 12 au cours de l'étape E10.

Dans une étape suivante E12 de vérification, le terminal de traitement 11 vérifie la donnée de contrôle reçue.

Si la vérification est positive (branche ok sur la figure 2), c'est-à-dire si la donnée de contrôle correspond à une authentification positive de l'utilisateur 13, alors dans une étape suivante E13 d'affichage d'un message d'invitation à saisir un montant, il est affiché sur l'écran 11-2 du terminal de traitement 11 un message invitant l'utilisateur 13 à saisir un montant. Il est également affiché sur la surface sensitive 11-3 du terminal de traitement 11 différents montants possibles, ou un clavier numérique adapté pour permettre à l'utilisateur de saisir le montant souhaité.

Dans une étape E14 de saisie d'un montant, l'utilisateur 13 saisit le montant qu'il souhaite retirer de son compte bancaire. Soit il sélectionne un montant proposé sur la surface sensitive 11-3, soit il saisit le montant à partir du clavier affiché sur la surface sensitive 11-3.

Dans une étape E15 de contrôle, il est vérifié que le montant saisi est cohérent avec des données bancaires propres à l'utilisateur. A cette fin un dialogue sécurisé est établi entre l'élément de sécurité 12-2 inséré dans le terminal mobile, plus précisément le container dédié à l'application NFC de retrait bancaire et l'établissement bancaire distant 14. Dans cette étape, l'établissement bancaire 14 vérifie que le compte associé à l'utilisateur 13 est créditeur d'un montant au moins supérieur au montant demandé.

Dans ce cas, dans une étape suivante E16 de distribution, le terminal de traitement 11 distribue à l'utilisateur 13 le montant demandé.

Dans une étape E17 de confirmation, l'établissement bancaire 14 émet un message de confirmation vers le terminal mobile 12 de l'utilisateur. Il s'agit par exemple d'un message « SMS » (de l'anglais « Short Message Service ») de confirmation à destination du terminal mobile 12 de l'utilisateur 13. Ce message de confirmation comprend des informations sur la transaction qui vient d'avoir lieu. Par exemple, le message SMS comprend l'heure du retrait, le nom de la banque associée au distributeur, et le montant du retrait.

Dans une étape suivante E18 de fin de transaction, il est procédé à la terminaison de la transaction. Le terminal de traitement 11 envoie un message de fin de communication au terminal mobile 12, à l'attention de l'utilisateur 13. Il est ensuite affiché sur l'écran 11-2 du terminal de traitement 11 un message informant l'utilisateur que la transaction est terminée et qu'il peut retirer sa main de la surface sensitive 11-2. On comprend que durant les étapes E1 à E17 l'utilisateur 13 maintient sa main sur la surface sensitive 11-3 du terminal de traitement 11 ou la maintient toujours très proche de cette surface de manière à maintenir un contact permanent entre le terminal mobile 12 et le terminal de traitement 11.

Au terme de l'étape E18 de fin de transaction, le terminal de traitement 11 retourne dans l'étape initiale E0 d'attente.

Si la vérification de la donnée de contrôle reçue effectuée au cours de l'étape E12 est négative (branche « nok » sur la figure), c'est-à-dire si l'authentification de l'utilisateur effectuée par le terminal mobile durant l'étape E9 a échoué, le terminal de traitement 11 peut mettre fin prématurément à la transaction en passant directement à l'étape E18 de fin de transaction.

Dans un exemple de réalisation correspondant au cas où la donnée personnelle d'authentification est un code PIN et dans un but de rendre le service encore plus sûr, au cours de l'étape E5 d'invitation à saisir une donnée personnelle d'authentification, les chiffres sont affichés sur le clavier numérique dans un ordre aléatoire. Ainsi, quelqu'un qui observerait l'utilisateur 13 en train de saisir son code aurait du mal à reconstituer la séquence à partir de la position des doigts de l'utilisateur. Dans un autre exemple de réalisation, un filtre de confidentialité est positionné sur la surface sensitive 11-3 sur laquelle est affiché le clavier. Un tel filtre de confidentialité est une protection qui se place devant la surface sensitive 11-3 et qui restreint la vision des données affichées de part et d'autre de l'axe de vision, rendant ainsi impossible l'observation du clavier par un tiers lors de la saisie. Le filtre de confidentialité est destiné à sécuriser la saisie de l'utilisateur 13. Bien sûr dans un autre exemple de réalisation, le filtre est combiné avec un clavier dont les touches sont affichées dans un ordre aléatoire.

Dans un autre exemple de réalisation de l'invention, le terminal de traitement 11 comprend également une plaque métallique, posée au niveau du sol, et sur laquelle l'utilisateur pose les pieds pour effectuer la transaction de retrait. Cette plaque métallique est destinée à maintenir un canal de communication permanent entre le terminal mobile 12 et le terminal de traitement 11 par le biais des pieds de l'utilisateur. Ainsi, la communication entre ces deux entités n'est pas rompue même si l'utilisateur éloigne ponctuellement sa main de la surface sensitive 11-3.

Avec le procédé de l'invention, l'utilisation classique de la carte bancaire est transposée sur le terminal mobile 12. Ainsi, la sécurité inhérente à l'utilisation d'une carte bancaire avec donnée personnelle d'authentification est renforcée d'une part par le fait que l'utilisateur 13 n'a pas à sortir sa carte bancaire de sa poche ou de son sac, et d'autre part par le fait que la saisie de la donnée personnelle d'authentification peut se faire sans que l'utilisateur ne sorte son terminal mobile. Ainsi, le terminal mobile 12 de l'utilisateur n'est pas exposé, ce qui diminue le risque de vol.

La donnée d'authentification saisie ici par l'utilisateur est un code PIN. L'invention n'est bien sûr pas limitée à cet exemple. Ainsi, dans un deuxième exemple de réalisation, la donnée personnelle d'authentification demandée est une empreinte digitale. Dans ce cas, au cours de l'étape E5 d'invitation, il est affiché sur la surface sensitive 11-2 du terminal de traitement 11 une zone déterminée sur laquelle l'utilisateur est invité à poser son doigt.

Dans un autre exemple de réalisation, la donnée d'authentification saisie est envoyée au cours de l'étape E5 d'envoi de manière sécurisée au terminal mobile 12. Par exemple, la donnée est chiffrée au moyen d'un algorithme de chiffrement préalablement à sa transmission. Les techniques de chiffrement sont supposées connues de l'homme du métier et ne sont pas décrites ici.

De même, dans un autre exemple de réalisation, la donnée de contrôle envoyée au terminal de traitement 11 au cours de l'étape E10 de réponse est transmise de manière sécurisée. Dans ce cas, elle est chiffrée préalablement à son envoi.

Dans l'exemple décrit ici, l'utilisateur 13 pose sa main sur la surface sensitive 11-3. Dans une variante de réalisation, l'utilisateur 13 approche sa main de la surface sensitive 11-3 d'une distance inférieure à une distance déterminée. Cette distance déterminée n'excède pas quelques centimètres. Ainsi, l'interface utilisateur 11-3 détecte qu'une partie du corps, par exemple la main, se situe à une distance inférieure à cette distance déterminée.

Le procédé d'authentification est décrit ici dans le cadre d'un service de retrait bancaire. L'invention n'est bien sûr pas limitée à ce service. Ainsi, le procédé s'applique aussi à tout service qui repose sur une application mémorisée dans l'élément de sécurité 12-2 du terminal mobile 12 et qui nécessite une authentification de l'utilisateur. Ainsi, l'invention s'applique par exemple aussi à des services de paiement au moyen du terminal mobile. L'invention s'applique également à des services liés au domaine de la santé et qui nécessitent une authentification préalable à un accès à des données personnelles de santé. L'invention peut s'appliquer également à des services de contrôle d'accès à des bâtiments, etc.

Un terminal de traitement 11 va maintenant être décrit en relation avec la figure 3 dans un mode particulier de réalisation.

Dans l'exemple de réalisation décrit en relation avec la figure 2, le terminal de traitement 11 est un terminal de retrait bancaire. Plus généralement, le terminal de traitement 11 est un équipement informatique, adapté pour émettre et recevoir des informations à travers le corps de l'utilisateur. A cette fin, il comprend :
- une interface radio 11-1, agencée pour émettre et recevoir des signaux électriques modulés transmis à travers le corps de l'utilisateur situé à une distance inférieure à une distance prédéterminée,
- une première interface utilisateur 11-2, agencée pour transmettre des informations à l'utilisateur. Dans un premier exemple de réalisation, la première interface utilisateur est un écran sur lequel des messages sont affichés à l'attention de l'utilisateur. Dans un autre exemple de réalisation, la première interface 11-2 est un haut-parleur adapté pour diffuser des messages vocaux. La première interface 11-2 constitue des moyens d'invitation agencés pour inviter l'utilisateur à saisir une donnée personnelle d'authentification,

- une deuxième interface utilisateur 11-3, agencée pour échanger des informations avec le terminal mobile 12 (non représenté sur le figure 3) à travers le corps de l'utilisateur. Par exemple, la deuxième interface utilisateur 11-3 est une surface sensitive que l'utilisateur peut effleurer ou sur laquelle il peut poser sa main. La deuxième interface 11-3 est couplée à l'interface radio 11-1,
- une unité de traitement de signaux 11-4, qui comprend un modulateur agencé pour moduler un premier signal numérique en un premier signal électrique modulé, un démodulateur agencé pour démoduler un deuxième signal électrique modulé reçu en un deuxième signal numérique, et des moyens de commutation pour connecter de façon alternative l'interface radio 11-1 au modulateur suite à la réception du deuxième signal électrique modulé, et l'interface radio au démodulateur suite à l'émission du premier signal modulé,
- une unité de traitement ou processeur 11-5, ou "CPU" (de l'anglais "Central Processing Unit"), destiné à charger des instructions en mémoire, à les exécuter, à effectuer des opérations ;
- un ensemble de mémoires, dont une mémoire volatile 11-6, ou "RAM" (pour "Random Access Memory") utilisée pour exécuter des instructions de code, stocker des variables, etc., et une mémoire de stockage 11-7 de type « EEPROM » (de l'anglais « Electrically Erasable Programmable Read Only Memory »). La mémoire de stockage 11-7 est en particulier agencée pour mémoriser la donnée personnelle d'authentification saisie par l'utilisateur,
- des moyens d'envoi 11-8, agencés pour envoyer la donnée personnelle d'authentification saisie par l'utilisateur au moyen de la deuxième interface utilisateur 11-3 au terminal mobile, à travers le corps de l'utilisateur,
- des moyens de réception 11-9, agencés pour recevoir du terminal mobile, à travers le corps de l'utilisateur une donnée représentant le résultat d'une vérification de la donnée personnelle d'authentification réalisée par le terminal de l'utilisateur,
- des moyens de vérification 11-10, agencés pour vérifier ladite donnée reçue.

Les interfaces utilisateur 11-2, 11-3, l'unité de traitement 11-4, les moyens d'envoi 11-8, de réception 11-9, et de vérification 11-10 sont de préférence des modules logiciels comprenant des instructions logicielles pour faire exécuter les étapes du procédé d'authentification précédemment décrit.

L'invention concerne donc aussi :
- un programme d'ordinateur comportant des instructions pour la mise en œuvre du procédé d'authentification tel que décrit précédemment lorsque ce programme est exécuté par un processeur du terminal de traitement ;
- un support d'enregistrement lisible sur lequel est enregistré le programme d'ordinateur décrit ci-dessus.

Les modules logiciels peuvent être stockés dans, ou transmis par un support de données. Celui-ci peut être un support matériel de stockage, par exemple un CD-ROM, une disquette magnétique ou un disque dur, ou bien un support de transmission tel qu'un signal ou un réseau de télécommunication.

L'invention concerne également un système d'authentification qui comprend un terminal de traitement tel que décrit précédemment et un terminal mobile comprenant une interface radio, adaptée pour émettre et recevoir des signaux radioélectriques à travers le corps de l'utilisateur.

Le terminal mobile est également agencé pour recevoir une donnée personnelle d'authentification, pour la vérifier et pour transmettre une donnée représentant le résultat de cette vérification. Dans un mode de réalisation particulier, le terminal mobile comprend un élément de sécurité 12.2 et est agencé pour vérifier la donnée personnelle d'authentification en la comparant avec une donnée personnelle d'authentification de référence, mémorisée dans l'élément de sécurité.

## Revendications

1. Procédé d'authentification entre un terminal mobile (12), situé à une distance inférieure à une première distance prédéterminée du corps d'un utilisateur (13), le terminal mobile comprenant une antenne NFC (12-1) constituant une interface radio adaptée pour émettre et recevoir des signaux radioélectriques, et un terminal de traitement (11) comprenant une antenne NFC (11-1) adaptée pour émettre et recevoir des signaux radioélectriques, le terminal mobile et le terminal de traitement échangeant des informations au moyen de signaux radioélectriques modulés, les signaux radioélectriques étant transmis entre le terminal mobile et le terminal de traitement en utilisant une capacité de conductivité du corps de l'utilisateur, le procédé comprenant :
- une étape (E1) de détection qu'une partie du corps de l'utilisateur est située à une distance inférieure à une deuxième distance prédéterminée d'une interface utilisateur (11-3) du terminal de traitement, ladite détection déclenchant un réveil du terminal de traitement et l'établissement d'une communication entre le terminal de traitement et le terminal mobile,
- une étape (E5) d'invitation de l'utilisateur par le terminal de traitement à saisir une donnée personnelle d'authentification,
- une étape (E7) d'envoi par le terminal de traitement au terminal mobile d'un signal radioélectrique comprenant ladite donnée personnelle d'authentification,
- une étape (E11) de réception par le terminal de traitement d'un signal radioélectrique émis par le terminal mobile comprenant une donnée représentant le résultat d'une vérification de la donnée personnelle d'authentification réalisée par le terminal mobile,
- une étape (E 12) de vérification de ladite donnée reçue par le terminal de traitement, l'authentification étant réussie lorsque la vérification est positive.

2. Procédé d'authentification selon la revendication 1, dans lequel la vérification de la donnée personnelle d'authentification réalisée par le terminal mobile consiste à comparer la donnée saisie avec une donnée de référence, mémorisée dans un élément de sécurité (12-2) du terminal mobile.

3. Procédé selon la revendication 1, dans lequel la donnée personnelle d'authentification saisie et la donnée représentant le résultat de la vérification sont transmises de manière sécurisée.

4. Procédé d'authentification selon la revendication 1, dans lequel l'étape d'invitation consiste à afficher sur l'interface utilisateur du terminal de traitement un clavier numérique comprenant des chiffres dans lequel l'ordre d'affichage des chiffres est aléatoire.

5. Procédé selon la revendication 4, dans lequel l'interface utilisateur du terminal de traitement est équipée d'un filtre de confidentialité, restreignant la vision du clavier virtuel affiché en dehors d'un axe de vision, rendant une observation par un tiers impossible lors de la saisie.

6. Utilisation du procédé d'authentification selon la revendication 1 dans un service de retrait bancaire, le procédé comprenant en outre, après une vérification positive :
- une étape d'invitation à saisir un montant,
- une étape de mémorisation d'un montant déterminé, choisi par l'utilisateur,
- une phase de dialogue avec un établissement bancaire (14) pour obtenir une autorisation de débit,
- si le débit est autorisé, une étape de distribution dudit montant.

7. Utilisation du procédé d'authentification selon la revendication précédente, comprenant en outre l'envoi d'un message de confirmation de transaction au terminal mobile.

8. Terminal de traitement (11) comprenant une interface radio NFC (11-1) agencée pour émettre et recevoir des signaux radioélectriques, le terminal de traitement échangeant des informations au moyen de signaux radioélectriques modulés avec un terminal mobile (12), les signaux radioélectriques étant transmis entre le terminal mobile, situé à une distance inférieure à une première distance prédéterminée du corps d'un utilisateur, et le terminal de traitement en utilisant une capacité de conductivité du corps de l'utilisateur, le terminal de traitement comprenant :
- une unité de traitement (11-5) ;
- une interface utilisateur (11-3), couplée à l'interface radio, agencée pour détecter qu'une partie du corps d'un utilisateur du terminal mobile est située à une distance inférieure à une deuxième distance prédéterminée, ladite détection déclenchant un réveil du terminal de traitement et l'établissement d'une communication entre le terminal de traitement et le terminal mobile,
- des moyens d'invitation (11-2), agencés pour inviter l'utilisateur à saisir une donnée personnelle d'authentification,
- des moyens d'envoi (11-8), agencés pour envoyer un signal radioélectrique comprenant ladite donnée personnelle d'authentification au terminal mobile,
- des moyens de réception (11-9), agencés pour recevoir un signal radioélectrique émis par le terminal mobile comprenant une donnée représentant le résultat d'une vérification de la donnée personnelle d'authentification réalisée par le terminal mobile,
- des moyens de vérification (11-10), agencés pour vérifier ladite donnée reçue.

9. Terminal de traitement selon la revendication 8, comprenant en outre une plaque métallique posée au sol, couplée à l'interface radio, maintenant la communication entre le terminal de traitement et le terminal mobile, lorsque l'utilisateur pose ses pieds sur ladite plaque.

10. Système d'authentification comprenant :
- un terminal de traitement selon la revendication 8, et
- un terminal mobile comprenant une antenne NFC (12-1) constituant une interface radio adaptée pour émettre et recevoir des signaux radioélectriques, situé à une distance inférieure à une distance prédéterminée du corps d'un utilisateur, le terminal mobile et le terminal de traitement échangeant des informations au moyen de signaux radioélectriques modulés, les signaux radioélectriques étant transmis entre le terminal mobile et le terminal de traitement en utilisant une capacité de conductivité du corps de l'utilisateur.

11. Programme sur un support de données et chargeable dans une mémoire interne d'un terminal de traitement, le programme comprenant des portions de code pour l'exécution des étapes du procédé d'authentification selon la revendication 1, lorsque le programme est exécuté sur ledit terminal.

12. Support de données sur lequel est enregistré le programme d'ordinateur selon la revendication 11.

## Patentansprüche

1. Authentifizierungsverfahren zwischen einem mobilen Endgerät (12), das sich in einer Entfernung befindet, die kleiner ist als eine erste vorbestimmte Entfernung vom Körper eines Benutzers (13), wobei das mobile Endgerät eine NFC-Antenne (12-1) aufweist, die eine zum Senden und Empfangen von Funksignalen geeignete Funkschnittstelle bildet, sowie ein Verarbeitungsendgerät (11), das eine NFC-Antenne (11-1) zum Senden und Empfangen von Funksignalen aufweist, wobei das mobile Endgerät und das Verarbeitungsendgerät mithilfe von modulierten Funksignalen Informationen austauschen, wobei die Funksignale zwischen dem mobilen Endgerät und dem Verarbeitungsendgerät unter Verwendung einer Leitfähigkeit des Körpers des Benutzers übertragen werden, wobei das Verfahren Folgendes aufweist:
- einen Schritt (E1) zum Erkennen, ob sich ein Teil des Körpers des Benutzers in einer Entfernung befindet, die kleiner ist als eine zweite vorbestimmte Entfernung von einer Benutzerschnittstelle (11-3) des Verarbeitungsendgeräts, wobei das Erkennen ein Aufwecken des Verarbeitungsendgeräts und das Herstellen einer Kommunikation zwischen dem Verarbeitungsendgerät und dem mobilen Endgerät auslöst,
- einen Schritt (E5) zum Auffordern des Benutzers durch das Verarbeitungsendgerät, ein persönliches Datenelement zur Authentifizierung einzugeben,
- einen Schritt (E7) zum Senden eines Funksignals, das das persönliche Datenelement zur Authentifizierung aufweist, von dem Verarbeitungsendgerät an das mobile Endgerät,
- einen Schritt (E11) zum Empfangen eines von dem mobilen Endgerät gesendeten Funksignals, das ein Datenelement aufweist, das das Ergebnis einer von dem mobilen Endgerät durchgeführten Überprüfung des persönlichen Datenelements zur Authentifizierung darstellt, durch das Verarbeitungsendgerät,
- einen Schritt (E12) zum Überprüfen des von dem Verarbeitungsendgerät empfangenen Datenelements, wobei die Authentifizierung erfolgreich ist, wenn die Überprüfung positiv ist.

2. Authentifizierungsverfahren nach Anspruch 1, wobei die von dem mobilen Endgerät durchgeführte Überprüfung des persönlichen Datenelements zur Authentifizierung darin besteht, das eingegebene Datenelement mit einem Referenzdatenelement zu vergleichen, das in einem Sicherheitselement (12-2) des mobilen Endgeräts gespeichert ist.

3. Verfahren nach Anspruch 1, wobei das eingegebene persönliche Datenelement zur Authentifizierung und das Datenelement, das das Ergebnis der Überprüfung darstellt, auf sichere Weise übertragen werden.

4. Authentifizierungsverfahren nach Anspruch 1, wobei der Schritt zum Auffordern darin besteht, auf der Benutzerschnittstelle des Verarbeitungsendgeräts eine numerische Tastatur anzuzeigen, die Ziffern aufweist, deren Reihenfolge bei der Anzeige zufällig ist.

5. Verfahren nach Anspruch 4, wobei die Benutzerschnittstelle des Verarbeitungsendgeräts mit einem Vertraulichkeitsfilter ausgestattet ist, der eine Betrachtung der virtuellen Tastatur außerhalb einer Betrachtungsachse einschränkt und dadurch eine Betrachtung durch einen Dritten während der Eingabe unmöglich macht.

6. Verwendung des Authentifizierungsverfahrens nach Anspruch 1 in einem Bankabhebungsdienst, wobei das Verfahren nach einer positiven Überprüfung darüber hinaus Folgendes aufweist:
- einen Schritt zum Auffordern der Eingabe eines Betrags,
- einen Schritt zum Speichern eines bestimmten Betrags, der vom Benutzer ausgewählt wurde,
- eine Phase des Dialogs mit einem Bankinstitut (14), um eine Lastschriftgenehmigung zu erhalten,
- wenn die Abbuchung autorisiert ist, einen Schritt zur Ausgabe des Betrags.

7. Verwendung des Authentifizierungsverfahrens nach dem vorhergehenden Anspruch, die darüber hinaus das Versenden einer Transaktionsbestätigungsnachricht an das mobile Endgerät aufweist.

8. Verarbeitungsendgerät (11), das eine NFC-Funkschnittstelle aufweist (11-1), die zum Senden und Empfangen von Funksignalen angeordnet ist, wobei das Verarbeitungsendgerät mithilfe von modulierten Funksignalen Informationen mit einem mobilen Endgerät (12) austauscht, wobei die Funksignale zwischen dem mobilen Endgerät, das sich in einer Entfernung befindet, die kleiner ist als eine erste vorbestimmte Entfernung vom Körper eines Benutzers, und dem Verarbeitungsendgerät unter Verwendung einer Leitfähigkeit des Körpers des Benutzers übertragen werden, wobei das Verarbeitungsendgerät Folgendes aufweist:
- eine Verarbeitungseinheit (11-5);
- eine Benutzerschnittstelle (11-3), die mit der Funkschnittstelle gekoppelt ist und angeordnet ist, um zu erkennen, ob sich ein Teil des Körpers eines Benutzers des mobilen Endgeräts in einer Entfernung befindet, die kleiner ist als eine zweite vorbestimmte Entfernung, wobei das Erkennen ein Aufwecken des Verarbeitungsendgeräts und das Herstellen einer Kommunikation zwischen dem Verarbeitungsendgerät und dem mobilen Endgerät auslöst,
- Mittel zum Auffordern (11-2), die angeordnet sind, um den Benutzer aufzufordern, ein persönliches Datenelement zur Authentifizierung einzugeben,
- Mittel zum Senden (11-8), die angeordnet sind, um an das mobile Endgerät ein Funksignal zu senden, das das persönliche Datenelement zur Authentifizierung aufweist,
- Mittel zum Empfangen (11-9), die angeordnet sind, um ein von dem mobilen Endgerät gesendetes Funksignal zu empfangen, das ein Datenelement aufweist, das das Ergebnis einer von dem mobilen Endgerät durchgeführten Überprüfung des persönlichen Datenelements zur Authentifizierung darstellt,
- Mittel zum Überprüfen (11-10), die angeordnet sind, um das empfangene Datenelement zu überprüfen.

9. Verarbeitungsendgerät nach Anspruch 8, das darüber hinaus eine auf dem Boden angeordnete Metallplatte aufweist, die mit der Funkschnittstelle gekoppelt ist und die Kommunikation zwischen dem Verarbeitungsendgerät und dem mobilen Endgerät aufrechterhält, wenn der Benutzer seine Füße auf die Platte setzt.

10. Authentifizierungssystem, das Folgendes aufweist:
- ein Verarbeitungsendgerät nach Anspruch 8 und
- ein mobiles Endgerät, das eine NFC-Antenne (12-1) aufweist, die eine zum Senden und Empfangen von Funksignalen geeignete Funkschnittstelle bildet, und sich in einer Entfernung befindet, die kleiner ist als eine vorbestimmte Entfernung vom Körper eines Benutzers, wobei das mobile Endgerät und das Verarbeitungsendgerät mithilfe von modulierten Funksignalen Informationen austauschen, wobei die Funksignale zwischen dem mobilen Endgerät und dem Verarbeitungsendgerät unter Verwendung einer Leitfähigkeit des Körpers des Benutzers übertragen werden.

11. Programm auf einem Datenträger, das in einen internen Speicher eines Verarbeitungsendgeräts geladen werden kann, wobei das Programm Codeteile zum Ausführen der Schritte des Authentifizierungsverfahrens nach Anspruch 1 aufweist, wenn das Programm auf dem Endgerät ausgeführt wird.

12. Datenträger, auf dem das Computerprogramm nach Anspruch 11 gespeichert ist.

## Claims

1. Method of authentication between a mobile terminal (12), situated at a distance less than a first predetermined distance from the body of a user (13), the mobile terminal comprising an NFC antenna (12-1) constituting a radio interface suitable for transmitting and receiving radio signals, and a processing terminal (11) comprising an NFC antenna (11-1) suitable for transmitting and receiving radio signals, the mobile terminal and the processing terminal exchanging information by means of modulated radio signals, the radio signals being transmitted between the mobile terminal and the processing terminal using a capacity for conductivity of the body of the user, the method comprising:
- a step (E1) of detecting that a part of the body of the user is situated at a distance less than a second predetermined distance from a user interface (11-3) of the processing terminal, said detection triggering a wakeup of the processing terminal and the establishment of communication between the processing terminal and the mobile terminal,
- a step (E5) of the processing terminal inviting the user to enter a personal authentication datum,
- a step (E7) of the processing terminal sending the mobile terminal a radio signal comprising said personal authentication datum,
- a step (E11) of the processing terminal receiving a radio signal transmitted by the mobile terminal comprising a datum representing the result of a verification of the personal authentication datum performed by the mobile terminal,
- a step (E12) of verifying said datum received by the processing terminal, the authentication being successful when the verification is positive.

2. Authentication method according to Claim 1, in which the verification of the personal authentication datum performed by the mobile terminal consists in comparing the datum entered with a reference datum, stored in a secure element (12-2) of the mobile terminal.

3. Method according to Claim 1, in which the personal authentication datum entered and the datum representing the result of the verification are transmitted in a secure manner.

4. Authentication method according to Claim 1, in which the invitation step consists in displaying on the user interface of the processing terminal a digital keyboard comprising digits in which the order in which the digits are displayed is random.

5. Method according to Claim 4, in which the user interface of the processing terminal is equipped with a confidentiality filter, restricting the vision of the virtual keyboard displayed off a vision axis, making observation by a third party impossible during entry.

6. Use of the authentication method according to Claim 1 in a banking withdrawal service, the method further comprising, after a positive verification:
- a step of inviting an amount to be entered,
- a step of storing a determined amount, chosen by the user,
- a phase of dialogue with a banking establishment (14) to obtain a debit authorization,
- if the debit is authorized, a step of distributing said amount.

7. Use of the authentication method according to the previous claim, further comprising sending a transaction confirmation message to the mobile terminal.

8. Processing terminal (11) comprising an NFC radio interface (11-1) arranged to transmit and receive radio signals, the processing terminal exchanging information by means of modulated radio signals with a mobile terminal (12), the radio signals being transmitted between the mobile terminal, situated at a distance less than a first predetermined distance from the body of a user, and the processing terminal using a capacity for conductivity of the body of the user, the processing terminal comprising:
- a processing unit (11-5);
- a user interface (11-3), coupled to the radio interface, arranged to detect that a part of the body of a user of the mobile terminal is situated at a distance less than a second predetermined distance, said detection triggering a wakeup of the processing terminal and the establishment of communication between the processing terminal and the mobile terminal,
- invitation means (11-2), arranged to invite the user to enter a personal authentication datum,
- sending means (11-8), arranged to send a radio signal comprising said personal authentication datum to the mobile terminal,
- reception means (11-9), arranged to receive a radio signal transmitted by the mobile terminal comprising a datum representing the result of a verification of the personal authentication datum performed by the mobile terminal,
- verification means (11-10), arranged to verify said datum received.

9. Processing terminal according to Claim 8, further comprising a metal plate placed on the ground and coupled to the radio interface, maintaining communication between the processing terminal and the mobile terminal, when the user places their feet on said plate.

10. Authentication system comprising:
- a processing terminal according to Claim 8, and
- a mobile terminal comprising an NFC antenna (12-1) constituting a radio interface suitable for transmitting and receiving radio signals, said terminal being situated at a distance less than a predetermined distance from the body of a user, the mobile terminal and the processing terminal exchanging information by means of modulated radio signals, the radio signals being transmitted between the mobile terminal and the processing terminal using a capacity for conductivity of the body of the user.

11. Program on a data medium and which can be loaded into an internal memory of a processing terminal, the program comprising portions of code for the execution of the steps of the authentication method according to Claim 1, when the program is executed on said terminal.

12. Data medium on which the computer program according to Claim 11 is stored.
